# EUROPEAN PATENT SPECIFICATION

(11) **EP 2 808 565 B1**
(45) Date of publication and mention of the grant of the patent: **12.04.2017**
(21) Application number: 14170459.3
(22) Date of filing: 29.05.2014
(51) Int. Cl.: F16B 12/16, E04B 1/61, F16B 12/20, A47B 96/06

(54) **Coupling device for furniture components**
Kupplungsvorrichtung für Möbelbauteile
Dispositif de couplage pour composants de meubles

(30) Priority: 30.05.2013 IT FI20130129
(43) Date of publication of application: 03.12.2014
(73) Proprietor: Angeli, Riccardo, 55045 Pietrasanta (LU) (IT); Tonarelli, Simone, 54100 Massa (MS) (IT)
(72) Inventor: Angeli, Riccardo, 55045 Pietrasanta (LU) (IT); Tonarelli, Simone, 54100 Massa (MS) (IT)
(74) Representative: Fanfani, Stefano

(56) References cited:
- WO-A2-2008/076089
- CH-A- 403 255

## Description

### Technical field

The present invention belongs to the sector of the devices used to join fittings components or furniture elements to each other.

### State of the art

The problem is felt of having devices to join furniture or fitting elements to each other in a simple and effective manner, while leaving the elements used invisible.

The modern technique used to produce modular furniture often comprises elements that shall be mechanically joined to each other; the traditional solution consists of using appropriate coupling means including, for instance, screws, a characteristic of which is in that they are visible to one who looks at inside the modular elements.

In addition to the problems, related to both safety and appearance, resulting from the visibility of the heads of the screws or the coupling means used in general, let's also emphasize the drawback of being obliged to act individually on a plurality of coupling means, with the evident time-spending problems related thereto.

Different devices have been developed over time, aiming at avoiding said drawbacks; examples of said devices are described in patent applications US 5435109 A, EP 1469206 A1 and EP 1798424 A1. Specifically, said three patent applications describe solutions in which the direction of actuation of the device by means of an appropriate tool is transversal with respect to the direction given to the special screws that allow to join two elements to each other, thus allowing to position the actuation area of the device in parts of the furniture that are hidden or at least little visible by the user or even in areas not easily accessible, so as to reduce the risks for safety.

Figure 6 of patent application WO 2008076089 A2 shows that the driven bevel gear pairs are possibly multiple, however the implementation of this particular solution is not clearly described and the example given concerns two screws only located in the shorter side of a furniture element.

It is also worth to remember that said coupling means might not be located immediately close to the access openings, and consequently be operated by means of appropriate tools, for instance screwdrivers or the like, as described in patent applications EP 0039766 A1 and EP 1438465 A1.

Furthermore, because of subsequent operations, the driving torques applied and, in general, the stresses that both the coupling means and the elements to be coupled will be submitted to, will vary depending on whether one acts onto the first screw or onto the last one.

### Purposes and summary of the invention

Consequently, there is a need for having devices capable of coupling furniture components and the like to each other, in such a way as to avoid the repetition of identical operations as well as to have the coupling means used invisible and to reduce the risk of causing different stresses in the different joining points.

The coupling device according to the present patent application aims at solving the problems described above.

Devices capable of transforming the rotary motion around a first axis into a rotary motion around a second axis are known for long time, and also known are devices capable of transforming a rotary motion into a translatory motion or into a rototranslatory motion.

To avoid the drawbacks described above, it has been conceived to use a device capable of transforming a rotary motion around a first axis (X) into a plurality of rototranslatory motions, each of the latter rotating in the same sense of rotation around an equal number of axes (Y), orthogonal to the plane (Z) containing said first axis (X).

The purpose of said parallel rototranslatory motions is to make a plurality of special screws including, for instance, self-tapping screws or wood conical screws advance in the same sense and according to parallel directions.

The present patent application describes a coupling device (1) suitable for coupling a first element (A) to a second element (B), comprising a box-like body (2) inside which there is a shaft (3) which rotates around said first axis (X). Said box-like body (2) is preferably realized by using a light, economical, and mechanically strong material, for instance it might be made of steel or aluminum. Initially, said body (2) is fixed onto said first element (A) by using appropriate connection means, for instance screws, glues or joints or any combinations thereof. Just to give an example, said box-like body (2) might even be inserted inside a channel realized in said first element and fixed thereto by means of self-tapping screws.

Having placed said body (2) onto said first element (A), a coupling with a second element (B) is implemented by means of at least one assembly (4) which causes the rototranslation of at least one special screw (5) towards said second element (B).

Said at least one assembly (4) is operated by a driven gear (32) co-operating with a driving gear (31) to transfer the rotation of said shaft (3) around an axis (X), said rotation being given by an external screwer, of a type already commonly known and which is not part of the present invention. On the basis of these considerations, it is evident that said external screwer, via said shaft (3), is able to simultaneously operate a plurality of special screws (5).

In order to connect said first element (A) to said second element (B) properly, so as to make the generated strengths similar to each other, the rototranslation caused by said assembly (4) take places according to axes (Y) orthogonal to a plane (Z) containing said axis (X).

In addition, in order for the screw to fully perform the functions committed thereto, concerning both the screwing direction and the possibility of submitting it to adequate stresses, said box-like body (2) possibly presents reinforcements, for instance stiffeners (24).

The box-like body (2) of said coupling device (1) can be easily obtained by extrusion or by bending a steel or aluminum sheet, so as to form a U-shaped channel iron. It will consequently be possible, through the open side, to position and fix all components inside said box-like body. Said U-shaped box-like body (2) will then possibly be closed by an appropriate cover plate or guard, to prevent foreign bodies from accessing it and consequently jeopardizing its functionality.

### Brief description of the drawings

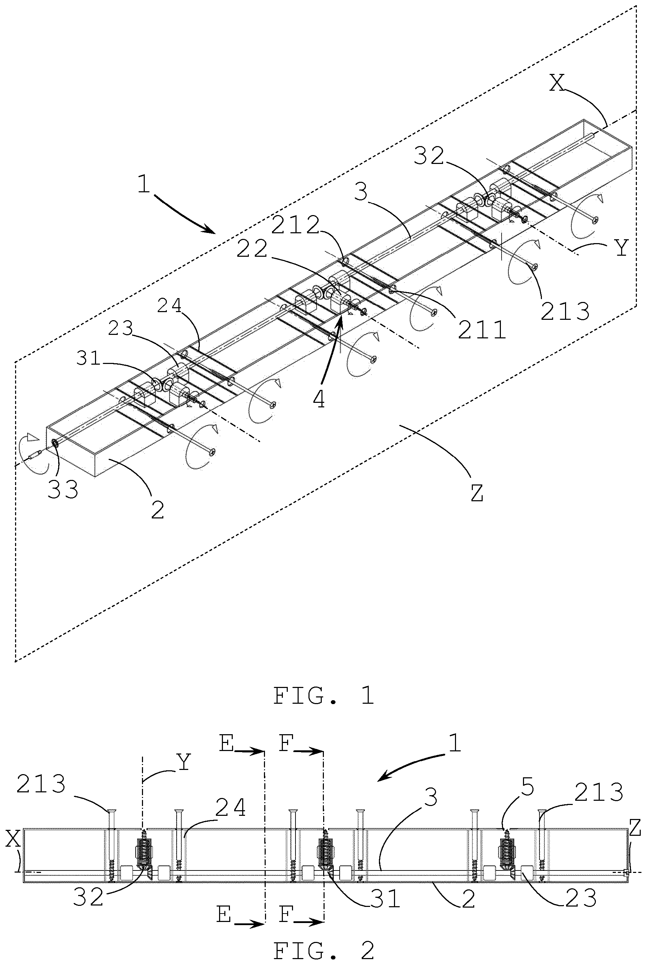

Fig. 1 shows an axonometric view of an embodiment of the coupling device (1). Besides the component elements that make said coupling device up, the figure also shows the rotation axis (X) of the shaft (3), the rototranslation axis (Y) of the special screw (5), and the plane (Z) containing said axis (X).
Fig. 2 shows a top view of the coupling device (1) shown in fig. 1.

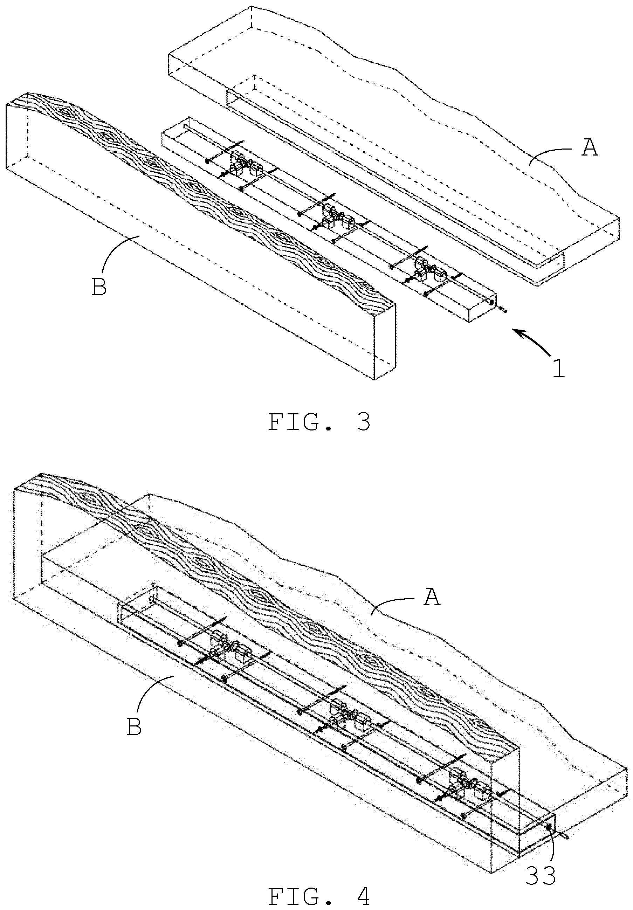

Fig. 3 shows an axonometric view of the coupling device (1) before joining a first element (A) to a second element (B).
Fig. 4 shows an axonometric view of the coupling device (1) after joining a first element (A) to a second element (B). The two elements having been coupled together, the coupling device (1) is not visible any longer. However, the shaft (3) can be moved by means of a socket head (33).

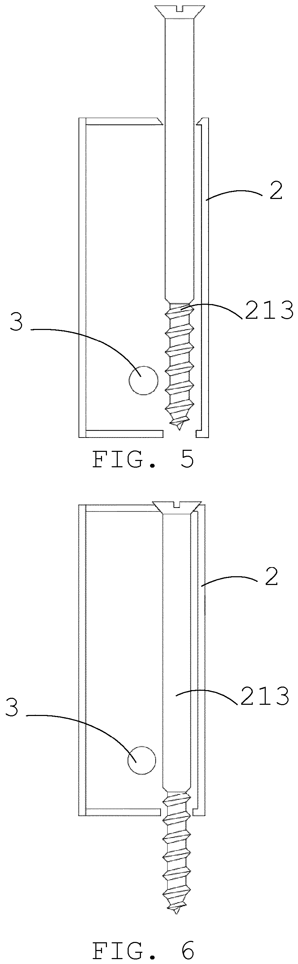

Fig. 5 shows a cross-section view of the coupling device (1) related to the trace of the E-E plane shown in fig. 2. The cross-section view emphasizes that the connection element (213) makes it possible to fix the box-like body (2) of the coupling device (1) to the first element (A). Some elements have been removed and the background is not present to make it easier to read this drawing.
Fig. 6 shows the connection element (213) in its work position, i.e. after fixing the coupling device (1) to a first element (A).

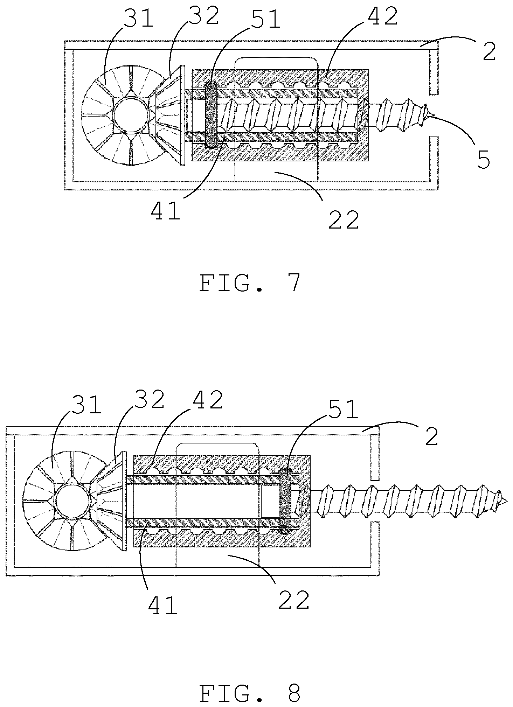

Fig. 7 shows a cross-section view of the coupling device (1) relevant to the trace of the F-F plane shown in fig. 2. This cross-section shows the elements that allow the rototranslation of the special screw (5) before coupling the first element (A) with a second element (B).
Fig. 8 shows the assembly (4) which causes a rototranslation of the special screw (5) after the first element (A) is coupled with the second element (B).

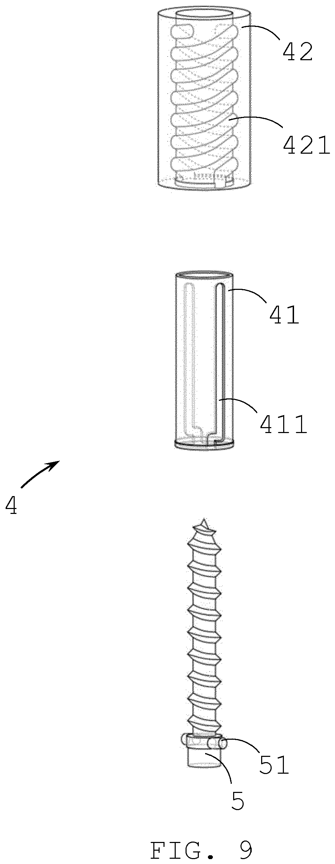

Fig. 9 shows the individual elements that make up an embodiment of the assembly (4) that causes the rototranslation and an embodiment of the special screw (5).

### Detailed description of an embodiment of the invention

In a preferred embodiment, the coupling device (1) comprises a U-shaped section box-like body (2) extending longitudinally, featuring appropriate connection means to connect to a first, at least 30 mm thick wooden element (A). Said connection means consist of six pairs (211 and 212) of lined-up drillings made in the two shoulders of the U-shaped body, enabling six connection elements (213), for instance six self-tapping screws, to pass through. This way, the six drilling pairs (211 and 212) are lined up and are made in said box-like body according to axes orthogonal to a plane containing said axis (X).

Inside said box-like body (2) a shaft (3) is rotationally placed and rotates around an axis (X), being driven into rotation by an external screwer which acts onto a socket head (33). In a particularly advantageous embodiment, said socket head (33) is located at an end of the shaft. Along said shaft there are several driving gears (31) which their respective driven gears (32) are associated with. In a preferred embodiment, said gears (31 and 32) form bevel gear pairs.

In turn, each of said driven gears (32) transmits the motion to a respective assembly (4) which causes the rototranslation of at least one special screw (5) towards a second furniture element (B).

In order to match the characteristics of the materials, said driven gear (32) can be associated with several assemblies (4) which can in turn act onto several special screws. For example, by proceeding in this way, it will be possible to get several connection points, in each of which several special screws (5) can co-operate.

In the embodiment here described, said rototranslatory assemblies (4) comprise an external hollow cylinder (42), rigidly connected to said box-like body (2) by means of a drilled support (22) and presenting two helicoidal grooves on its own inner surface. Said external hollow cylinder is coaxial to an internal hollow cylinder (41) which, being integral with said driving gear (32), rotates with respect to said external hollow cylinder (42).

Inside said rotating internal hollow cylinder there is said special screw (5), the latter presenting two orthogonal projections (51), each of which crosses its respective longitudinal slot cut in said internal hollow cylinder (41) to engage one of said two helicoidal grooves present on the external hollow cylinder (42).

In a preferred embodiment, the special screw (5) is inserted inside the internal hollow cylinder (41) and the external hollow cylinder (42) via appropriate openings close to the bases of said cylinders.

Thanks to the coupling device (1), the rotation of the shaft (3), driven by the external screwer via the socket head (33), is distributed via the bevel gear pairs, formed of every driving gear (31) and its respective driven gear (32), to its respective assembly (4) of the latter, which assembly causes a rototranslation of the special screw (5). Specifically, the rotating internal hollow cylinders (41), being integral with their respective driven gears (32), cause a rotation around parallel axes (Y) of their respective special screws (5), thanks to the projections (51) engaging said longitudinal slots (411).

Said orthogonal projections (51) also engage the helicoidal grooves (421) of the external hollow cylinder (42), so that the rotation of the rotating internal hollow cylinder (41) forces a rototranslatory motion to every special screw (5) which threads all of them simultaneously in the second element (B).

Consequently said special screws (5) perform rototranslatory motions according to axes (Y) coincident with parallel straight lines that are orthogonal to a plane (Z) containing the straight line coincident with said axis (X).

The amount of the advance of said special screws (5) inside the second element (B) can be properly set by acting on the grooves (421) of the external hollow cylinder (42), i.e. breaking said grooves results in a stop.

The shaft (3) is usually associated with said box-like body (2) by means of appropriate supports which allow its rotation, for instance bushes (either one-piece bushes or two-piece bushes).

This traditional type of assembling can be conveniently modified, in order to prevent a non-perfect coupling of the gears, by placing said bushes not only at the ends, but also all along said shaft (3), so as to implement anti-swing supports (23).

To be able to assure exact movements and to provide sufficient torques to make it possible for the special screws (5) to operate correctly, in addition to said anti-swing supports (23), said box-like body (2) can be provided with appropriate stiffeners (24). Said stiffeners (24) might be punchings made in several points of said box-like body (2).

Even though said coupling device (1) has been developed to join two elements, the here described invention easily allows to also join two elements (A and B) formed of several elements aligned to each other, respectively. This is possible by using connection means (21) and special screws (5) that act onto said multiple elements.

Just as an example, a piece of furniture can be assembled, by using the just described coupling device (1), by operating from the rear of the piece of furniture so as to render the connections between its component parts, invisible. As a matter of fact, everything is hidden by the back of the piece of furniture itself. In a similar way it is possible to proceed to assemble the internal shelves, the brackets and the like.

## Claims

1. A coupling device (1) to join a first element (A) to a second element (B), comprising a box-like body (2) which presents appropriate connection means to connect to said first element (A) and inside which a shaft (3), rotating around an axis (X), is rotationally accommodated; said shaft (3) supports one or several driving gears (31), each of which co-operating with at least one driven gear (32) respectively, the latter being operationally connected to at least one assembly (4) that causes the rototranslation of at least one special screw (5) towards said second furniture element (B), said rototranslation of said at least one screw (5) takes place according to an axis (Y) orthogonal to a plane (Z) containing said axis (X) **characterized in that** said at least one assembly (4) comprises an external hollow cylinder (42), rigidly connected to said box-like body (2) and presenting on its own inner surface one or several helicoidal grooves (421), said external hollow cylinder (42) being coaxial with a rotating internal hollow cylinder (41), the latter being integral with said driven gear (32) and presenting one or several longitudinal slots (411).

2. A coupling device (1) according to the previous claim, **characterized in that** inside said rotating internal hollow cylinder there is a special screw (5) presenting one or several orthogonal projections (51) each of which suitable for crossing one of said longitudinal slots (411) and engaging one of said helicoidal grooves (421) so that the rototranslation of said special screw (5) takes place through the combination of the actions exerted onto said orthogonal projections (51) by said external hollow cylinder (42) and by said rotating internal hollow cylinder (41).

3. A coupling device (1) according to one or several of the previous claims, **characterized in that** the rigid connection between said external hollow cylinder (42) and said box-like body (2) is accomplished by means of a drilled support (22).

4. A coupling device (1) according to one or several of the previous claims, **characterized in that** said connection means comprise at least one pair of lined up drillings (211 and 212), made on said box-like body according to axes orthogonal to a plane containing said axis (X), each of said pairs being capable of allowing the trough passage of a connection element (213) to fix said box-like body (2) to said first element (A).

5. A coupling device (1) according to one or several of the previous claims, **characterized in that** said connection element (213) is a self-tapping screw or a wood screw.

6. A coupling device (1) according to one or several of the previous claims, **characterized in that** each of the pairs formed of said one or several driving gears (31) and of its respective driven gear (32) is a bevel gear pair.

7. A coupling device (1) according to one or several of the previous claims, **characterized in that** said shaft (3) is rotationally coupled with said box-like body (2) by means of anti-swing supports (23).

8. A coupling device (1) according to one or several of the previous claims, **characterized in that** said box-like body (2) presents appropriate stiffeners (24).

9. A coupling device (1) according to one or several of the previous claims, **characterized in that** said box-like body (2) extends along said axis (X) so as to engage the face of said first element (A) facing said second element (B) along at least half of its length and said shaft (3) is operated by a face of said box-like body (2) perpendicular to said axis (X).

## Patentansprüche

1. Kupplungsvorrichtung (1), um ein erstes Element (A) mit einem zweiten Element (B) zu verbinden, umfassend einen kastenartigen Körper (2), das geeignete Verbindungsmittel für die Verbindung des ersten Elements (A) aufweist und in dessen Innerem eine Welle (3), die um eine Achse (X) dreht, drehbar untergebracht ist; die Welle (3) unterstützt ein oder mehrere Antriebsräder (31), das jeweils mit mindestens einem angetriebenen Getriebe (32) kooperiert, wobei der letztere mit mindestens einer Baugruppe (4) betriebswirksam verbunden ist, die die Drehverschiebung mindestens einer Spezialschraube (5) in Richtung des zweiten Möbelbauteilelement (B) verursacht, wobei die Drehverschiebung der mindestens einen Schraube (5) gemäß einer Achse (Y) orthogonal zu einer Ebene (Z) erfolgt, die die Achse (X) umfasst, **dadurch gekennzeichnet, dass** die mindestens eine Baugruppe (4) einen äußeren Hohlzylinder (42) umfasst, der starr mit dem kastenartigen Körper (2) verbunden ist und auf seiner inneren Oberfläche eine oder mehrere spiralförmige Nuten (421) aufweist, wobei der äußere Hohlzylinder (42) koaxial mit einem drehenden inneren Hohlzylinder (41) ist, wobei der letztere integral mit dem angetriebenen Getriebe (32) ist und einen oder mehrere Längsschlitze (411) aufweist.

2. Kupplungsvorrichtung (1) nach dem vorhergehenden Anspruch, **dadurch gekennzeichnet, dass** innerhalb des drehenden inneren Hohlzylinders eine Spezialschraube (5) angeordnet ist, die ein oder mehrere orthogonale Vorsprünge (51) aufweist, jeweils geeignet, einen der Längsschlitze (411) zu überqueren und eine der spiralförmigen Nuten (421) eingreift, so dass die Drehverschiebung der Spezialschraube (5) durch die Kombination der Wirkungen erfolgt, die auf die orthogonalen Vorsprünge (51) durch den äußeren Hohlzylinder (42) und durch den drehenden inneren Hohlzylinder (41) ausgeübt werden.

3. Kupplungsvorrichtung (1) nach einem oder mehreren der vorhergehenden Ansprüche, **dadurch gekennzeichnet, dass** die starre Verbindung zwischen dem äußeren Hohlzylinder (42) und dem kastenartigen Körper (2) mittels einer gebohrten Unterstützung (22) erzielt wird.

4. Kupplungsvorrichtung (1) nach einem oder mehreren der vorhergehenden Ansprüche, **dadurch gekennzeichnet, dass** die Verbindungsmittel mindestens ein Paar von ausgerichteten Bohrungen (211 und 212) umfassen, die auf dem kastenartigen Körper nach Achsen orthogonal zu einer Ebene gemacht sind, die die Achse (X) unterbringt, wobei jedes Paar den Durchgang eines Verbindungselementes (213) erlauben kann, um den kastenartigen Körper (2) an dem ersten Element (A) zu befestigen.

5. Kupplungsvorrichtung (1) nach einem oder mehreren der vorhergehenden Ansprüche, **dadurch gekennzeichnet, dass** das Verbindungselement (213) eine selbstschneidende Schraube oder eine Holzschraube ist.

6. Kupplungsvorrichtung (1) nach einem oder mehreren der vorhergehenden Ansprüche, **dadurch gekennzeichnet, dass** jedes Paar, das aus einem oder mehreren Antriebsrädern (31) und dessen jeweiligen angetriebenen Getriebe (32) besteht, ein Kegelräderpaar ist.

7. Kupplungsvorrichtung (1) nach einem oder mehreren der vorhergehenden Ansprüche, **dadurch gekennzeichnet, dass** die Welle (3) mit dem kastenartigen Körper (2) mit Hilfe von einer Anti-Drehungstütze (23) drehgekoppelt ist.

8. Kupplungsvorrichtung (1) nach einem oder mehreren der vorhergehenden Ansprüche, **dadurch gekennzeichnet, dass** der kastenartige Körper (2) geeignete Versteifungen (24) aufweist.

9. Kupplungsvorrichtung (1) nach einem oder mehreren der vorhergehenden Ansprüche, **dadurch gekennzeichnet, dass** der kastenförmige Körper (2) sich entlang der Achse (X) erstreckt, um die Fläche des ersten Elements (A), das dem zweiten Element (B) gegenüber ist, entlang mindestens der Hälfte ihrer Länge einzugreifen und die Welle (3) durch eine Fläche des kastenartigen Körpers (2) senkrecht zur Achse (X) betätigt wird.

## Revendications

1. Dispositif de couplage (1) pour joindre un premier composant (A) à un deuxième composant (B), comprenant un corps en forme de boîte (2) qui présente des moyens de connexion appropriés pour se relier audit premier élément (A) et à l'intérieur duquel un arbre (3), tournant autour d'un axe (X), est logé d'une façon rotationnelle; ledit arbre (3) supporte un ou plusieurs engrenages conducteurs (31), chacun desquels coopérant respectivement avec au moins un engrenage conduit (32), celui-ci étant opérationnellement relié à au moins un ensemble (4) qui cause la rototranslation d'au moins une vis spéciale (5) vers ledit deuxième composant de meubles (B), ladite rototranslation de ladite au moins une vis (5) a lieu selon un axe (Y) orthogonal à un plan (Z) contenant ledit axe (X), **caractérisé en ce que** ledit au moins un ensemble (4) comprend un cylindre creux externe (42), rigidement relié audit corps en forme de boîte (2) et présentant sur sa propre surface interne une ou plusieurs cannelures hélicoïdales (421), ledit cylindre creux externe (42) étant coaxial par rapport à un cylindre creux interne rotatif (41), celui-ci étant solidaire dudit engrenage conduit (32) et présentant une ou plusieurs fentes longitudinales (411).

2. Dispositif de couplage (1) selon la revendication précédente, **caractérisé en ce que** à l'intérieur dudit cylindre creux interne il y a une vis spéciale (5) présentant une ou plusieurs saillies orthogonales (51) chacune desquelles adaptée pour passer à travers une desdites fentes longitudinales (411) et engager une desdites cannelures hélicoïdales (421) de telle sorte que la rototranslation de ladite vis spéciale (5) a lieu grâce à la combinaison des actions exercées sur lesdites saillies orthogonales (51) par ledit cylindre creux externe (42) et par ledit cylindre creux interne rotatif (41).

3. Dispositif de couplage (1) selon une ou plusieurs des revendications précédentes, **caractérisé en ce que** la connexion rigide entre ledit cylindre creux externe (42) et ledit corps en forme de boîte (2) est réalisé par l'intermédiaire d'un support creux (22).

4. Dispositif de couplage (1) selon une ou plusieurs des revendications précédentes, **caractérisé en ce que** lesdits moyens de connexion comprennent au moins une paire de perçages alignés (211 et 212), pratiqués dans ledit corps en forme de boîte suivant des axes orthogonaux à un plan contenant ledit axe (X), chacune desdites paires étant capable de permettre le passage d'un élément de connexion (213) pour fixer ledit corps en forme de boîte (2) audit premier composant (A).

5. Dispositif de couplage (1) selon une ou plusieurs des revendications précédentes, **caractérisé en ce que** ledit élément de connexion (213) est une vis autotaraudeuse ou une vis à bois.

6. Dispositif de couplage (1) selon une ou plusieurs des revendications précédentes, **caractérisé en ce que** chacune des paires formées desdits un ou plusieurs engrenages conducteurs (31) et de son engrenage conduit (32) respectif est une paire d'engrenages coniques.

7. Dispositif de couplage (1) selon une ou plusieurs des revendications précédentes, **caractérisé en ce que** ledit arbre (3) est couplé d'une façon rotationnelle avec ledit corps en forme de boîte (2) par l'intermédiaire de supports anti-gondolage (23).

8. Dispositif de couplage (1) selon une ou plusieurs des revendications précédentes, **caractérisé en ce que** ledit corps en forme de boîte (2) présente des éléments de raidissement (24).

9. Dispositif de couplage (1) selon une ou plusieurs des revendications précédentes, **caractérisé en ce que** ledit corps en forme de boîte (2) s'étend le long dudit axe (X) de telle sorte à engager la face dudit premier composant (A) regardant ledit deuxième composant (B) sur au moins une moitié de sa longueur et ledit arbre (3) est entraîné par une face dudit corps en forme de boîte (2) perpendiculaire audit axe (X).
